(19) **Europäisches Patentamt / European Patent Office / Office européen des brevets**

(11) **EP 1 686 151 B1**

(12) **EUROPEAN PATENT SPECIFICATION**

(45) Date of publication and mention
of the grant of the patent:
**19.12.2007 Bulletin 2007/51**

(51) Int Cl.:
**C08K 3/36** (2006.01) **B60C 1/00** (2006.01)

(21) Application number: **06000020.5**

(22) Date of filing: **02.01.2006**

(54) **Rubber composition and tire having tread comprising thereof**

Gummizusammensetzung und Reifen mit solche enthaltende Reifenlauffläche

Composition de caoutchouc et pneumatique comprenant bande de roulement comprenant celle-ci

(84) Designated Contracting States:
**DE FR GB**

(30) Priority: **28.01.2005 JP 2005021240**

(43) Date of publication of application:
**02.08.2006 Bulletin 2006/31**

(73) Proprietor: **Sumitomo Rubber Industries Ltd
Kobe-shi,
Hyogo-ken (JP)**

(72) Inventors:
• **Hochi, Kazuo
Chuo-ku
Kobe-shi
Hyogo-ken (JP)**
• **Uesaka, Kenichi
Chuo-ku
Kobe-shi
Hyogo-ken (JP)**

(74) Representative: **Manitz, Finsterwald & Partner
GbR
Postfach 31 02 20
80102 München (DE)**

(56) References cited:
EP-A- 1 260 544          EP-A- 1 323 774
US-A- 5 896 904          US-B1- 6 169 137
US-B1- 6 211 278

• PATENT ABSTRACTS OF JAPAN vol. 2000, no. 11, 3 January 2001 (2001-01-03) & JP 2000 230079 A (OHTSU TIRE & RUBBER CO LTD :THE), 22 August 2000 (2000-08-22)

**Description**

The present invention relates to a rubber composition and a tire having a tread comprising thereof.

Lowering of fuel cost of a vehicle has been conventionally carried out by reducing rolling resistance of a tire (improvement of rolling resistance performance). Request for lowering of fuel cost of a vehicle has been recently increased and excellent low heat buildup is required for a rubber composition for producing a tread which occupies high occupancy ratio in tires among tire members.

As a method for satisfying low heat buildup of the rubber composition, a method of decreasing the amount of a filler for reinforcement is known. However, there have been problems that tires are softened because hardness of the rubber composition is lowered, and handling performance (drivability) of a vehicle and wet skid performance of a tire becomes lowered.

Further, a rubber composition for a tire containing anhydrous silica and hydrous silica is disclosed in Japanese Unexamined Patent Publication No. 2003-192842 in order to improve the wet skid performance. However, there has been a problem that the rolling resistance performance is not sufficiently improved.

Thus, a rubber composition capable of producing a tire which improves all of the rolling resistance performance, the wet skid performance and the drivability of a vehicle in good balance has not been known yet.

It is the object of the present invention to provide a rubber composition capable of producing a tire having a tread comprising thereof which attains low fuel consumption and improves rolling resistance performance, wet skid performance and drivability of a vehicle in good balance.

The present invention relates to a rubber composition comprising 30 to 150 parts by weight of the total of (1) silica with a nitrogen adsorption specific area of 100 $m^2$/g or less and (2) silica with a nitrogen adsorption specific area of 180 $m^2$/g or more based on 100 parts by weight of a rubber component, wherein the content of silica (1) and silica (2) satisfies the following formula:

$$[\text{Content of silica (1)}] \times 0.2 \leq [\text{content of silica (2)}] \leq [\text{content of silica (1)}] \times 6.5$$

The present invention relates to a tire having a tread comprising the rubber composition.

The rubber composition of the present invention comprises a rubber component, (1) silica with a nitrogen adsorption specific area of 100 $m^2$/g or less (hereinafter, referred to as silica (1)) and (2) silica with a nitrogen adsorption specific area of 180 $m^2$/g or more (hereinafter, referred to as silica (2)).

As the rubber component, a diene rubber is preferable. The example of the diene rubber includes a natural rubber (NR), a isoprene rubber (IR), a butadiene rubber (BR), a styrene-butadiene rubber (SBR), an acrylonitrile-butadiene rubber (NBR), a chloroprene rubber (CR), a butyl rubber (IIR), a styrene-isoprene-butadiene copolymer rubber (SIBR) and the like. These diene rubbers may be used alone or in a combination use of two or more. Among these, SBR is preferable because rolling resistance and wet skid performance can be improved in good balance.

Silica (1) and silica (2) include, for example, silica (anhydrous silica) obtained by a dry method, silica (hydrous silica) obtained by a wet method, and the like, and silica obtained by a wet method is preferable in particular.

The nitrogen adsorption specific area (hereinafter, referred to as $N_2SA$) of silica (1) is 100 $m^2$/g or less, preferably 80 $m^2$/g or less and more preferably 60 $m^2$/g or less. When $N_2SA$ is more than 100 $m^2$/g, the effect of mixing with silica (2) becomes low. Further, $N_2SA$ of the silica (1) is preferably 20 $m^2$/g or more and more preferably 30 $m^2$/g or more. When $N_2SA$ of silica (1) is less than 20 $m^2$/g, fracture strength of a rubber composition tends to be lowered.

The content of silica (1) is preferably 10 parts by weight or more based on 100 parts by weight of a rubber component and more preferably 20 parts by weight or more. When the content is less than 10 parts by weight, the rolling resistance tends to be not adequately reduced. Further, the content of silica (1) is preferably 120 parts by weight or less and more preferably 80 parts by weight or less. When the content exceeds 120 parts by weight, the fracture strength tends to be lowered.

$N_2SA$ of silica (2) is 180 $m^2$/g or more, preferably 190 $m^2$/g or more and more preferably 195 $m^2$/g or more. When $N_2SA$ is less than 180 $m^2$/g, the effect of mixing with silica (1) becomes low. Further, the $N_2SA$ of the silica (2) is preferably 300 $m^2$/g or less and more preferably 240 $m^2$/g or less. When $N_2SA$ exceeds 300 $m^2$/g, processability tends to be deteriorated.

The content of silica (2) is preferably 5 parts by weight or more based on 100 parts by weight of a rubber component and more preferably 10 parts by weight or more. When the content is less than 5 parts by weight, adequate drivability does not tend to be obtained. Further, the content of silica (2) is preferably 100 parts by weight or less and more preferably 60 parts by weight or less. When the content exceeds 100 parts by weight, the processability tends to be deteriorated.

The total content of silica (1) and silica (2) is 30 parts by weight or more based on 100 parts by weight of a rubber component, preferably 40 parts by weight or more and more preferably 50 parts by weight or more. When the total content is less than 30 parts by weight, reinforcement effect by addition of silica (1) and silica (2) is not sufficiently obtained. Further, the total content of silica (1) and silica (2) is 150 parts by weight or less, preferably 120 parts by weight or less, and more preferably 100 parts by weight or less. When the total content exceeds 150 parts by weight, it is difficult to uniformly disperse silica in the rubber composition and the processability of the rubber composition is deteriorated.

The content of silica (1) and silica (2) satisfies the following formula:

$$[\text{Content of silica (1)}] \times 0.2 \leq [\text{content of silica (2)}] \leq [\text{content of silica (1)}] \times 6.5$$

The content of silica (2) is 0.2 tome or more of the content of silica (1). When the content of silica (2) is less than 0.2b time or more of the content of silica (1), drivability is lowered. Further, the content of silica (2) is 6.5 times or less of the content of silica (1), preferably 4 times or less and more preferably 1 time or less. When the content of silica (2) is more than 6.5 times of the content of silica (1), the rolling resistance is increased.

All of the rolling resistance performance, the wet skid performance of a tire and the drivability of a vehicle can be improved in good balance by compounding and kneading a specific amount of silica (1) and silica (2) with the rubber component.

The rubber composition of the present invention preferably comprises an organic vulcanizing agent other than the rubber component, silica (1) and silica (2). The organic vulcanizing agent is the vulcanizing agent satisfying the following general formula;

$$-(R-S_x)_n-$$

wherein R is $(CH_2-CH_2-O)_m-CH_2-CH_2$, x is an integer of 3 to 6, n is an integer of 10 to 400, and m is an integer of 2 to 5.

In the formula, x is preferably an integer of 3 to 6, more preferably an integer of 3 to 5. When x is less than 3, vulcanization tends to be delayed. When x is more than 6, production of the rubber composition tends to be difficult.

In the formula, n is preferably an integer of 10 to 400, more preferably an integer of 10 to 300. When n is less than 10, the organic vulcanizing agent becomes volatile and handling tends to be difficult. When n is more than 400, compatibility between the organic vulcanizing agent and the rubber tend to become worse.

In the formula, m is preferably an integer of 2 to 5, more preferably an integer of 2 to 4, more preferably an integer of 2 to 3. When m is less than 2, bending resistance tends to be low. When m is more than 5, hardness of the rubber composition tends to become insufficient.

The content of the organic vulcanizing agent is at least 0.5 part by weight, preferably at least 1 part by weight, more preferably 2 parts by weight based on 100 parts by weight of the rubber components. When the content of the organic vulcanizing agent is less than 0.5 part by weight, abrasion resistance tends to be worse. The content of the organic vulcanizing agent is at most 30 parts by weight, preferably at least 25 parts by weight. When the content of the organic vulcanizing agent is more than 30 parts by weight, grip performance tends to be worse due to excess raising of hardness.

In the rubber composition of the present invention, the amounts usually used of fillers for reinforcement such as carbon black and clay, an antioxidant, a softener, zinc oxide, stearic acid, wax, a vulcanizing agent other than the organic vulcanizing agent, a silane coupling agent, a vulcanization accelerator, a processing aid and the like which are used for production of a rubber composition can be also contained in addition to the fore-mentioned rubber component, silica (1), silica (2), and the organic vulcanizing agent.

The tire of the present invention comprises preferably the fore-mentioned rubber composition and in particular, preferably has a tread comprising the rubber composition. Further, the tread can be prepared by a method of making a sheet shape of a rubber composition and laminating the sheets in a predetermined shape, or a method of inserting a rubber composition into two or more of extruders and forming two layers at the head exit of the extruder.

EXAMPLES

The present invention is specifically explained based on Examples, but the present invention is not limited thereto.

Various chemicals used in Examples are specifically described below.

SBR: E15 manufactured by Asahi Kasei Corporation

Silica (1): ULTRASIL 360 manufactured by Degussa Corporation (hydrous silica produced by a wet method; $N_2$SA: 50 $m^2$/g)

Silica (2): ZEOSIL 1205MP manufactured by Rhodia Co. (hydrous silica produced by a wet method; $N_2$SA: 200 $m^2$/g)

Silica (3): ULTRASIL VN3 manufactured by Degussa Corporation (hydrous silica produced by a wet method; $N_2$SA: 175 $m^2$/g)

Aromatic oil: DIANNA PROCESS OIL AH-24 manufactured by Idemitsu Kosan Co., Ltd.

Zinc oxide: ZINC OXIDE manufactured by Mitsui Mining And Smelting Company, Limited

Stearic acid: STEARIC ACID "TSUBAKI" manufactured by NOF Corporation.

Antioxidant: Antigene 6C (N-(1,3-dimethylbutyl)-N'-phenyl-p-phenylenediamine) manufactured by Sumitomo Chemical Co., Ltd.

Wax: SUNNOC N, manufactured by OUCHISHINKO CHEMICAL INDUSTRIAL CO., LTD.

Sulfur: SULFUR POWDER manufactured by Karuizawa Sulfur Co.

Organic vulcanizing agent: 20S4 manufactured by Kawaguchi Chemical Industry Co. Ltd. (in the above general formula of the organic vulcanizing agent, m=2, x=4, n=200)

Vulcanization accelerator CZ: NOCCELER CZ (N-cyclohexyl-2-benzothiazylsulfeneamide) manufactured by OUCHISHINKO CHEMICAL INDUSTRIAL CO., LTD.

Vulcanization accelerator DPG: NOCCELER D (N,N'-diphenylguanidine) manufactured by OUCHISHINKO CHEMICAL INDUSTRIAL CO., LTD.

EXAMPLES 1 to 2 and COMPARATIVE EXAMPLES 1 to 3

In accordance with the contents shown in Table 1, SBR, silica (1) to (3), aromatic oil, zinc oxide, stearic acid, an antioxidant and wax were kneaded with a Banbury mixer for 3 minutes, and further, sulfur as a vulcanizing agent, an organic vulcanizing agent and a vulcanization accelerator were kneaded thereto with a roll to obtain each of kneaded products. Each of the kneaded products was molded into a tread shape respectively and it was laminated with other tire members to be vulcanized to produce the test tires (tire size: 195/65R15) of Examples 1 to 7 and Comparative Examples 1 to 3.

(Rolling resistance performance)

The rolling resistance of the test tires under conditions of rim size (15 x 6JJ), tire inner pressure (230 kPa), load (3.43 kN) and speed (80 km/h) was measured using a rolling resistance tester in Table 1. The rolling resistance value of Comparative Example 1 was referred to as 100 and other values were indicated by index. And in Table 2, the rolling resistance value of Example 5 was referred to as 100 and other values were indicated by index. The larger the index is, the more the rolling resistance is reduced, and it shows that the rolling resistance performance is good.

(Wet skid performance)

The test tires were mounted on all wheels of a vehicle (domestic vehicle of FF2000cc), and a braking distance from a point at which brake was applied at a speed of 100 km/h was measured on wet asphalt road surface. Further, respective braking distances were applied to the formula below and represented with indices respectively. It is indicated that the larger the index is, the better the wet skid performance is.

Index of wet skid performance in Table 1 = (braking distance of Comparative Example 1) ÷ (braking distance of respective Examples or respective Comparative Examples) × 100

Index of wet skid performance in Table 2 = (braking distance of Example 5) ÷ (braking distance of respective Examples or respective Comparative Examples) × 100

(Drivability)

The test tires were mounted on all wheels of a vehicle (domestic vehicle of FF2000cc), in-vehicle running on a test course was carried out and drivability was evaluated by sensory evaluation of a driver. 10 Point is referred to as a perfect score, assuming that Comparative Example 1 was referred to as 6 point in Table 1 and Example 5 was referred to as 6 point in Table 2, respective relative evaluations were carried out. It is indicated that the larger the numerical value is, the more superior and better the drivability is.

The test results of rolling resistance, wet skid performance and drivability in Examples 1 to 2 and Comparative Examples 1 to 3 are shown in Table 1.

TABLE 1

|  | Examples | | Comparative Examples | | |
| --- | --- | --- | --- | --- | --- |
|  | 1 | 2 | 1 | 2 | 3 |
| Compounding amount (parts by weight) | | | | | |
| SBR | 100 | 100 | 100 | 100 | 100 |
| Silica (1) | 40 | 48 | - | 57 | 5 |
| Silica (2) | 20 | 12 | - | 3 | 55 |
| Silica (3) | - | - | 60 | - | - |
| Aromatic oil | 8 | 8 | 8 | 8 | 8 |
| Zinc oxide | 3 | 3 | 3 | 3 | 3 |
| Stearic acid | 2 | 2 | 2 | 2 | 2 |
| Antioxidant | 2 | 2 | 2 | 2 | 2 |
| Wax | 2 | 2 | 2 | 2 | 2 |
| Sulfur | 1.5 | 1.5 | 1.5 | 1.5 | 1.5 |
| Vulcanization accelerator CZ | 1.3 | 1.3 | 1.3 | 1.3 | 1.3 |
| Vulcanization accelerator DPG | 0.5 | 0.5 | 0.5 | 0.5 | 0.5 |
| Evaluation result | | | | | |
| Index of rolling resistance performance | 104 | 106 | 100 | 102 | 97 |
| Index of wet skid performance | 101 | 102 | 100 | 100 | 100 |
| Index of drivability | 6.5 | 6 | 6 | 5 | 6.5 |

(Abrasion resistance)

After tires were mounted on all wheels of the vehicle and the vehicle run 30,000km, groove depth of tread pattern was measured and inverse number thereof was calculated. The inverse number of the grove depth in Example 5 was referred to as 100, the other inverse numbers were represented by index to be an index of abrasion resistance. The larger the index is, the more excellent the abrasion resistance is.

Test results of rolling resistance, wet skid performance, drivability and abrasion resistance are shown in Table 2.

TABLE 2

|  | Examples | | | | |
| --- | --- | --- | --- | --- | --- |
|  | 3 | 4 | 5 | 6 | 7 |
| Compounding amount (parts by weight) | | | | | |
| SBR | 100 | 100 | 100 | 100 | 100 |

(continued)

| | Examples | | | | |
|---|---|---|---|---|---|
| | 3 | 4 | 5 | 6 | 7 |
| Silica (1) | 40 | 40 | 40 | 40 | 40 |
| Silica (2) | 20 | 20 | 20 | 20 | 20 |
| Aromatic oil | 8 | 8 | 8 | 8 | 8 |
| Zinc oxide | 3 | 3 | 3 | 3 | 3 |
| Stearic acid | 2 | 2 | 2 | 2 | 2 |
| Antioxidant | 2 | 2 | 2 | 2 | 2 |
| Wax | 2 | 2 | 2 | 2 | 2 |
| Sulfur | 1 | - | 1.5 | 1 | - |
| Organic vulcanizing agent | 1 | 5 | - | 0.5 | 35 |
| Vulcanization accelerator CZ | 1.3 | 1.3 | 1.3 | 1.3 | 1.3 |
| Vulcanization accelerator DPG | 0.5 | 0.5 | 0.5 | 0.5 | 0.5 |
| Evaluation result | | | | | |
| Index of rolling resistance performance | 102 | 103 | 100 | 102 | 104 |
| Index of wet skid Performance | 101 | 102 | 100 | 100 | 95 |
| Index of abrasion residence | 103 | 105 | 100 | 98 | 106 |
| Index of drivability | 6 | 6.5 | 6 | 5.5 | 6.5 |

According to the present invention, there can be provided a rubber composition capable of producing a tire having a tread comprising thereof which attains low fuel consumption and improves rolling resistance performance, wet skid performance and drivability of a vehicle in good balance, and the tire having a tread comprising the rubber composition.

**Claims**

1.  A rubber composition comprising 30 to 150 parts by weight of the total of (1) silica with a nitrogen adsorption specific area of 100 $m^2$/g or less and (2) silica with a nitrogen adsorption specific area of 180 $m^2$/g or more based on 100 parts by weight of a rubber component, wherein the content of silica (1) and silica (2) satisfies the following formula:

$$[\text{Content of silica (1)}] \times 0.2 \leq [\text{content of silica (2)}] \leq [\text{content of silica (1)}] \times 6.5.$$

2.  The rubber composition of Claim 1, further comprising 0.5 to 30 parts by weight of an organic vulcanizing agent represented by the following formula;

$$-(R-S_x)_n-$$

wherein R is $(CH_2-CH_2-O)_m-CH_2-CH_2$, x is an integer of 3 to 6, n is an integer of 10 to 400, and m is an integer of 2 to 5.

3.  A tire having a tread comprising the rubber composition according to Claim 1.

**Patentansprüche**

1.  Kautschukzusammensetzung enthaltend 30 bis 150 Gewichtsteile von in der Summe (1) Silika mit einer durch Stickstoffadsorption gemessenen spezifischen Oberfläche von 100 $m^2$/g oder weniger und (2) Silika mit einer durch Stickstoffadsorption gemessenen spezifischen Oberfläche von 180 $m^2$/g oder mehr basierend auf 100 Gewichtsteilen einer Kautschukkomponente, wobei der Gehalt an Silika (1) und Silika (2) der nachfolgenden Formel genügt:

$$[\text{Content of silica (1)}] \times 0.2 \leq [\text{content of silica (2)}] \leq [\text{content of silica (1)}] \times 6.5.$$

6,5.

2. Kautschukzusammensetzung nach Anspruch 1, desweiteren enthaltend 0,5 bis 30 Gewichtsteile eines organischen Vulkanisierungsmittels dargestellt durch die nachfolgende Formel:

$$-(R-S_x)_n-$$

worin R $(CH_2\text{-}CH_2\text{-}O)_m\text{-}CH_2\text{-}CH_2$ ist, x eine ganze Zahl zwischen 3 und 6 ist, n eine ganze Zahl zwischen 10 und 400 ist und m eine ganze Zahl zwischen 2 und 5 ist.

3. Reifen mit einer Lauffläche enthaltend eine Kautschukzusammensetzung nach Anspruch 1.

**Revendications**

1. Composition de caoutchouc comprenant 30 à 150 parties en poids du total de (1) silice avec une aire spécifique d'adsorption de l'azote de 100 $m^2$/g ou moins et (2) silice avec une aire spécifique d'adsorption de l'azote de 180 $m^2$/g ou plus, sur la base de 100 parties en poids d'un composant de caoutchouc, où la teneur en silice (1) et en silice (2) satisfait à la formule suivante :

$$[\text{Content of silica (1)}] \times 0.2 \leq [\text{content of silica (2)}] \leq [\text{content of silica (1)}] \times 6.5.$$

2. Composition de caoutchouc selon la revendication 1, comprenant en outre 0,5 à 30 parties en poids d'un agent de vulcanisation organique représenté par la formule :

$$-(R-S_x)_n-$$

dans laquelle R est $(CH_2\text{-}CH_2\text{-}O)_m\text{-}CH_2\text{-}CH_2$, x est un entier de 3 à 6, n est un entier de 10 à 400 et m est un entier de 2 à 5.

3. Pneumatique ayant une bande de roulement comprenant la composition de caoutchouc selon la revendication 1.

**EP 1 686 151 B1**

**REFERENCES CITED IN THE DESCRIPTION**

**Patent documents cited in the description**

- JP 2003192842 A